**Europäisches Patentamt**

**European Patent Office**

**Office européen des brevets**

(19)

(11) Veröffentlichungsnummer: **0 137 099**
**B1**

# (12) EUROPÄISCHE PATENTSCHRIFT

(45) Veröffentlichungstag der Patentschrift:
02.09.87

(21) Anmeldenummer: 84105387.9

(22) Anmeldetag: 12.05.84

(51) Int. Cl.⁴: **G 01 B 11/00**

(54) **Messeinrichtung.**

(30) Priorität: 16.07.83 DE 3325803

(43) Veröffentlichungstag der Anmeldung:
17.04.85 Patentblatt 85/16

(45) Bekanntmachung des Hinweises auf die Patenterteilung:
02.09.87 Patentblatt 87/36

(84) Benannte Vertragsstaaten:
AT CH DE FR GB IT LI NL SE

(56) Entgegenhaltungen:
DE-A-1 548 874
DE-A-2 152 803
US-A-3 276 010

(73) Patentinhaber: Dr. Johannes Heidenhain GmbH,
Nansenstrasse 17, D-8225 Traunreut (DE)

(72) Erfinder: Nelle, Günther, Dr.- Ing., Eichenweg 12,
D-8221 Bergen (DE)

EP 0 137 099 B1

## Beschreibung

Die Erfindung betrifft eine lichteclektrische inkrementale Meßeinrichtung gemäß dem Oberbegriff des Anspruchs 1.

Bei einer derartigen Meßeinrichtung können die durch die Referenzmarken erzeugten elektrischen Steuerimpulse auf verschiedene Weise verwertet werden, z. B. zum Reproduzieren der Nullposition im Zähler, zum Anfahren einer bestimmten Position zu Beginn der Messung und zur Meßwertüberwachung vor Störimpulsen sowie zur Beaufschlagung einer nachgeschalteten Steuereinrichtung.

Bei Codemeßeinrichtungen, also Meßeinrichtungen ohne Referenzmarken, die mehrere Teilungsspuren mit unterschiedlichen Gitterkonstanten aufweisen, ist es bekannt, verschieden große Abstände zwischen den Teilungsspuren und den zugehörigen Abtastfeldern vorzusehen, wobei die Abstände aus den Gitterkonstanten der Teilungsspuren und aus der Wellenlänge des Lichts der Beleuchtungseinrichtung bestimmen (DE-A-15 48 874).

In der DE-C-29 52 106 ist eine inkrementale Längen- oder Winkelmeßeinrichtung beschrieben, bei der auf einem Maßstab neben der Teilung Referenzmarken mit jeweils unterschiedlichen Strichgruppenverteilungen vorgesehen sind. Die einzelnen Referenzmarken werden von Abtastfeldern in einer Abtasteinheit abgetastet, wobei jedes Abtastfeld einer Referenzmarke eindeutig zugeordnet ist, indem es die gleiche Strichgruppenverteilung aufweist. Zur eindeutigen Abtastung dieser Referenzmarken darf wegen der unregelmäßigen Strichgruppenverteilungen der Abstand zwischen dem Maßstab und der Abtastplatte höchstens etwa $4d^2\lambda$ betragen, wobei d die Breite des schmalsten Striches der Strichteilung der Referenzmarken und $\lambda$ die Schwerpunktwellenlänge des Lichts bedeuten.

Weiter ist bekannt, daß zum Abtasten einer regelmäßigen periodischen inkrementalen Teilung eines Maßstabs nicht nur ein einziger bestimmter Abstand zwischen dem Maßstab und der Abtastplatte eingehalten werden muß, sondern daß verschieden große Abstände möglich sind. Wird die Teilung eines Maßstabs von Licht mit parallelem Strahlengang durchsetzt, so entstehen in bestimmten Ebenen hinter der Teilungsebene des Maßstabs durch Interferenzen der an der Teilung des Maßstabs gebeugten Lichtstrahlen Beugungsbilder der Teilung des Maßstabs, die mit Abtastteilungen gleicher Gitterkonstante abgetastet werden können. Diese Ebenen haben bei einer Gitterkonstanten $P_M$ der Teilung des Maßstabs und einer Schwerpunktwellenlange $\lambda$ des Lichts Abstande $n \cdot p_M^2/\lambda$ (n = 0,1,2,...) von der Teilungsebene des Maßstabs. Optimale elektrische Abtastsignale können daher bei Abstanden $n \cdot p_M^2/\lambda$ der Teilungsebene der Abtastplatte von der Teilungsebene des Maßstabs erzeugt werden (Machine Shop Magazine, April 1962, Seite 208). Das Vorsehen größerer Abstande zwischen dem Maßstab und der Abtastplatte besitzt den Vorteil, daß die Meßeinrichtung unempfindlicher gegen mechanische Einflüsse wie z. B. Bearbeitungsspane ist, die sich bei kleinen Abstanden leichter zwischen dem Maßstab und der Abtastplatte einklemmen und zu Beschädigungen der Teilungen des Maßstabs und der Abtastplatte führen können; des weiteren läßt sich der Maßstab und die Abtastplatte bei Verschmutzungen leichter reinigen. Ein weiterer Vorteil größerer Abstände ist darin zu sehen, daß die Abstandstoleranzen bei diesen größeren Abständen oft größer sind, so daß an die Führungsgenauigkeit der Abtastplatte bezüglich des Maßstabs geringere Anforderungen gestellt werden müssen. Ferner besitzen bei größeren Abständen auch die bei der Abtastung der inkrementalen Teilung des Maßstabs erzeugten periodischen Abtastsignale eine sinusförmigere Signalform, so daß sich die Signalperiode der Abtastsignale zur Interpolation besser unterteilen läßt.

Die Ausnutzung sehr großer Abstände zwischen Maßstab und Abtastplatte bei der Abtastung der inkrementalen Teilung ist ohne zwischengeschaltete Abbildungsoptik nur bei Meßeinrichtungen möglich, deren Maßstab keine Referenzmarken aufweist, da zur eindeutigen Abtastung der Referenzmarken, wie oben dargelegt, ein bestimmter geringer Abstand zwischen dem Maßstab und der Abtastplatte nicht überschritten werden darf.

Der Erfindung liegt die Aufgabe zugrunde, bei einer Meßeinrichtung mit auf einem Maßstab vorgesehenen Referenzmarken eine eindeutige Abtastung der Referenzmarken und eine optimale Abtastung der Teilung des Maßstabs zu ermöglichen.

Diese Aufgabe wird erfindungsgemäß durch die Merkmale Anspruchs 1 und 2 gelöst.

Die mit der Erfindung erzielten Vorteile bestehen insbesondere darin, daß bei einer Meßeinrichtung der oben erwähnten Gattung mit einfachen Mitteln die jeweils benötigten günstigsten Abstande zur sicheren Abtastung der inkrementalen Teilung und der Referenzmarken des Maßstabs gewahlt werden können, so daß die Meßgenauigkeit und der Unterteilungsgrad bei einer Interpolation der Meßwerte sich erhöhen. Durch das Vorsehen größerer Abstände zwischen der Teilung des Maßstabs und den zugehörigen Abtastfeldern der Abtastplatte können an die Führungsgenauigkeit der Abtastplatte bezuglich des Maßstabs geringere Anforderungen gestellt werden, da bei diesen größeren Abstanden oft auch die Abstandstoleranzen zunehmen. Es brauchen somit bei einer derartigen Meßeinrichtung, bei der ein bestimmter geringer Abstand zwischen den Referenzmarken und den zugehörigen Abtastfeldern nicht überschritten werden darf, keine hochgenauen Führungen vorgesehen sein, womit sich eine einfach aufgebaute und preisgünstige Meßeinrichtung ergibt. Die vorgeschlagenen einfachen Maßnahmen haben keine Änderungen der Außenabmessungen zur Folge, so daß die Flexibilität des Einsatzes der Meßeinrichtung an Maschinen erhalten bleibt.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1 schematisch eine inkrementale Meßeinrichtung,

Figur 2 einen Maßstab mit Referenzmarken,

Figur 3 eine Abtastplatte mit Abtastfeldern,

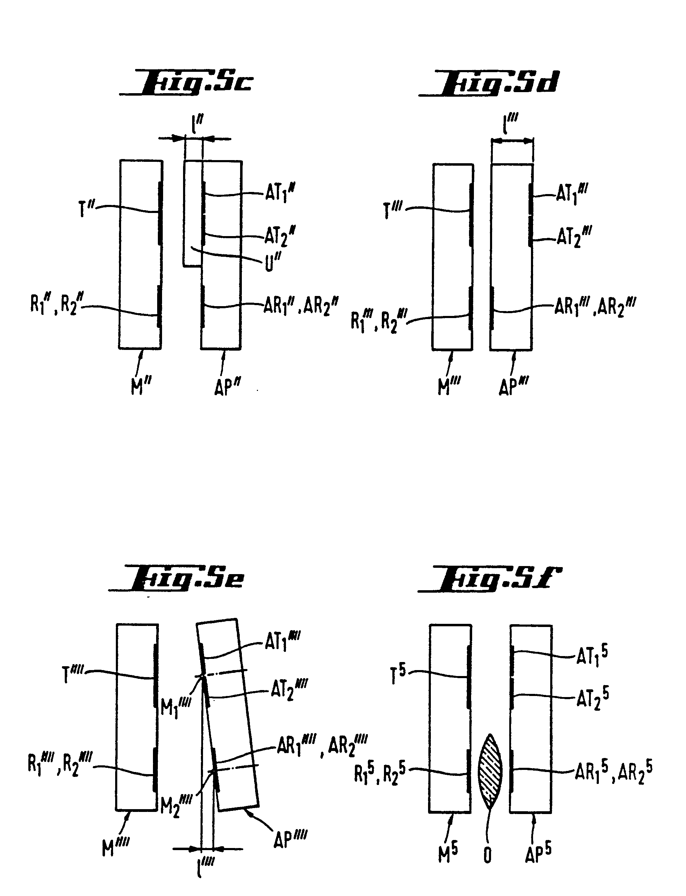

Figur 4 eine graphische Darstellung der Amplituden der Lichtmodulation und

Figur 5 a bis 5 f verschiedene schematische Ausführungsformen von Maßstab und Abtastplatte.

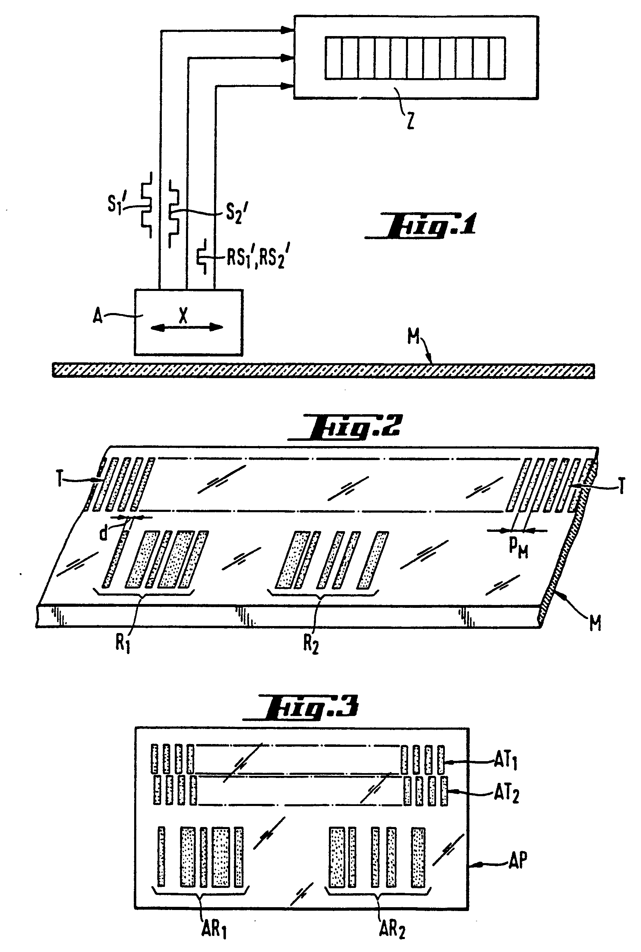

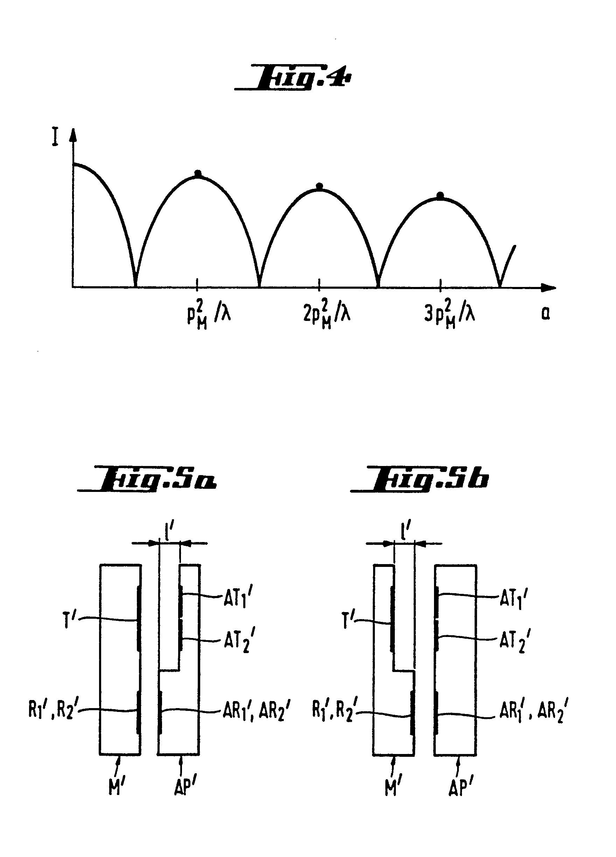

In Figur 1 ist schematisch eine lichtelektrische inkrementale Längenmeßeinrichtung gezeigt, die aus einem Maßstab M und aus einer Abtasteinheit A besteht, die jeweils in nicht dargestellter Weise mit zu messenden Objekten, beispielsweise mit Maschinenteilen einer Bearbeitungsmaschine verbunden sind. Auf dem Maßstab M ist eine inkrementale Teilung T in Form eines Strichgitters (Figur 2) aufgebracht, die im Auflicht berührungsfrei photoelektrisch von der Abtasteinheit A abgetastet wird. Neben der Teilung T sind zwei Referenzmarken $R_1$, $R_2$ angeordnet, die der Teilung T absolut zugeordnet sind und jeweils aus einer Gruppe von Strichen mit einer unregelmäßigen Strichverteilung bestehen; die Strichgruppenverteilungen der beiden Referenzmarken $R_1$, $R_2$ müssen einander möglichst unähnlich sein.

Die durch die Abtastung der Teilung T mittels der in Meßrichtung X verschiebbaren Abtasteinheit A erzeugten periodischen Abtastsignale $S_1$, $S_2$, die in der Abtasteinheit A verstärkt und in Rechtecksignale $S_1'$, $S_2'$ umgeformt werden, steuern einen elektronischen Zähler Z, der die Meßwerte in digitaler Form anzeigt. Die um ein Viertel der Gitterkonstanten $p_M$ (Teilungsperiode) der Teilung T zueinander verschobenen Rechtecksignale $S_1'$, $S_2'$ dienen der Diskriminierung der Abtastrichtung. Die an den Referenzmarken $R_1$, $R_2$ erzeugten Referenzsignale $RS_1$, $RS_2$ werden ebenfalls in der Abtasteinheit A verstärkt, in Rechtecksignale $RS_1'$, $RS_2'$ umgeformt und ebenfalls dem Zähler Z zugeführt.

Mit den gewonnenen Referenzsignalen $RS_1$, $RS_2$ können verschiedene Funktionen ausgelöst werden. Durch Auswertung der Referenzsignale $RS_1$, $RS_2$ wird beispielsweise aus einer inkrementalen Meßeinrichtung eine quasi absolute Meßeinrichtung, wenn jeder Referenzmarke $R_1$, $R_2$ eine Zahl zugeordnet wird, die deren absolute Position, bezogen auf einen unveränderlichen Nullpunkt, darstellt. Ferner kann eine bestimmte Referenzmarke $R_1$, $R_2$ dazu dienen, den Zähler Z beim Auftreten des aus der bestimmten Referenzmarke $R_1$, $R_2$ gewonnenen Referenzsignals $RS_1$, $RS_2$ auf den Wert "Null" zu setzen.

Zur Abtastung des Maßstabs M ist in der Abtasteinheit A eine Abtastplatte AP nach Figur 3 vorgesehen, die zur Abtastung der Teilung T zwei um ein Viertel der Gitterkonstanten p der Teilung T zueinander versetzte Abtastfelder $AT_1$, $AT_2$ aufweist, die mit der Teilung T identisch sind; den Abtastfeldern $AT_1$, $AT_2$ sind nicht gezeigte Photoelemente zur Erzeugung der Abtastsignale $S_1$, $S_2$ zugeordnet. Zur Abtastung der Referenzmarken $R_1$, $R_2$ sind auf der Abtastplatte AP Abtastfelder $AR_1$, $AR_2$ vorgesehen; die Strichgruppenverteilungen der einzelnen Abtastfelder $AR_1$, $AR_2$ sind mit den Strichgruppenverteilungen der zugehörigen Referenzmarken $R_1$, $R_2$ identisch, so daß bei Deckung von Referenzmarke $R_1$, $R_2$ und zugehörigem Abtastfeld $AR_1$, $AR_2$ die Referenzsignale $RS_1$, $RS_2$ hervorgerufen werden. Durch die Identität der Strichverteilungen von Referenzmarke $R_1$ und Abtastfeld $AR_1$ bzw. der Strichverteilungen von Referenzmarke $R_2$ und Abtastfeld $AR_2$ ist sichergestellt, daß nur das zur jeweiligen Referenzmarke $R_1$, $R_2$ zugehörige Abtastfeld $AR_1$, $AR_2$ ein Referenzsignal $RS_1$, $RS_2$ mit ausreichend großen Nutz-/Störsignalverhältnis hervorbringen kann. Wird beispielsweise das Abtastfeld $AR_1$ an der nichtzugehörigen Referenzmarke $R_2$ vorbeibewegt, kann kein Referenzsignal hervorgerufen werden.

Wird die periodische inkrementale Teilung T des Maßstabs M von parallelem Licht durchsetzt, so entstehen in bestimmten Ebenen hinter der Ebene der Teilung T des Maßstabs M durch Interferenzen der an der Teilung T des Maßstabs M gebeugten Lichtstrahlen Beugungsbilder der Teilung T des Maßstabs M. Diese Ebenen haben bei der Gitterkonstanten $p_M$ der Teilung T des Maßstabs M und einer Schwerpunktwellenlänge $\lambda$ des Lichts Abstände $n \cdot p_M^2/\lambda$ (n = 0,1,2,...) von der Ebene der Teilung T des Maßstabs M. In Eigur 4 sind die Amplituden I der bei einer Relativbewegung zwischen zwei Teilungen gleicher Gitterkonstante auftretenden Lichtmodulation in Abhängigkeit vom gegenseitigen Abstand a dargestellt. Optimale elektrische Abtastsignale $S_1$, $S_2$ werden daher nur beim Abstand $n \cdot p_M/\lambda$ der Ebene der Abtastfelder $AT_1$, $AT_2$ der Abtastplatte AP von der Ebene der Teilung T des Maßstabs M erzeugt.

Zur eindeutigen Abtastung der Referenzmarken $R_1$, $R_2$ auf dem Maßstab M darf wegen ihrer unregelmäßigen Strichgruppenverteilungen der Abstand zwischen den Referenzmarken $R_1$, $R_2$ und den zugehörigen Abtastfeldern $AR_1$, $AR_2$ auf der Abtastplatte AP in Lichtstrahlenrichtung hochstens etwa $4d^2/\lambda$ betragen, wobei d die Breite des schmalsten Striches der Strichteilungen der Referenzmarken $R_1$, $R_2$ bedeutet. Dagegen muß zur optimalen Abtastung der Teilung T des Maßstabs M der Abstand zwischen der Teilung T und den zugehörigen

Abtastfeldern $AT_1$, $AT_2$ auf der Abtastplatte AP in Lichtstrahlenrichtung etwa $n \cdot p_M/\lambda$ ($n = 1,2,3...$) betragen.

Erfindungsgemäß wird daher vorgeschlagen, daß die optische Weglänge der Lichtstrahlen zwischen der Teilung T des Maßstabs M und den zugehörigen Abtastfeldern $AT_1$, $AT_1$ der Abtastplatte AP und die optische Weglänge der Lichtstrahlen zwischen den Referenzmarken $R_1$, $R_2$ des Maßstabs M und den zugehörigen Abtastfeldern $AR_1$, $AR_2$ der Abtastplatte AP einen Gangunterschied h aufweisen. Dabei wird des Jangunterschied h zwangsweise als Diffrenz zwischen dem gewählten Abstand $n \cdot p_M^2/\lambda$ und dem Abstand $4d^2/\lambda$ gewählt.

Zur Erzielung des Gangunterschieds $h = c' \cdot l'$ sind gemäß Figur 5a die Abtastfelder $AT_1'$, $AT_2'$ und die Abtastfelder $AR_1'$, $AR_2'$ der Abtastplatte AP' in Lichtstrahlenrichtung um die Strecke l' parallel zueinander versetzt, während die Teilung T' und die Referenzmarken $R_1'$, $R_2'$ des Maßstabs M' in einer Ebene liegen; c' bedeutet der Brechungsindex des von den Lichtstrahlen durchsetzten Mediums. Zur Erzielung des gleichen Gangunterschieds $h = c' \cdot l'$ sind nach Figur 5b die Teilung T' und die Referenzmarken $R_1'$, $R_2'$ des Maßstabs M' in Lichtstrahlenrichtung um die Strecke l' parallel zueinander versetzt, während die Abtastfelder $AT_1'$, $AT_2'$ und die Abtastfelder $AR_1'$, $AR_2'$ der Abtastplatte AP' in einer Ebene liegen.

Nach Figur 5c liegen zur Erzielung des Gangunterschieds $h = c'' \cdot l''$ die Abtastfelder $AT_1''$, $AT_2''$ und die Abtastfelder $AR_1''$, $AR_2''$ der Abtastplatte AP'' in einer Ebene. In Lichtstrahlenrichtung ist vor den Abtastfeldern $AT_1''$, $AT_2''$ eine transparente Schicht U'' mit einer Schichtdicke l'' in Lichtstrahlenrichtung und einem Brechungsindex c'' angeordnet.

Gemäß Figur 5d weist zur Erzielung des Gangunterschiedes $h = c''' \cdot l'''$ die transparente Abtastplatte AP''' eine Schichtdicke l''' in Lichtstrahlenrichtung und einen Brechungsindex c''' auf. Die Abtastfelder $AR_1'''$, $AR_2'''$ sind auf der dem Maßstab M''' zugewandten Oberfläche der Abtastplatte AP''' und die Abtastfelder $AT_1'''$, $AT_2'''$ auf der dem Maßstab M''' abgewandten Oberfläche der Abtastplatte AP''' angeordnet.

Zur Erzielung des Gangunterschiedes $h = c'''' \cdot l''''$ liegen nach Figur 5e die Abtastfelder $AT_1''''$, $AT_2''''$ und die Abtastfelder $AR_1''''$, $AR_2''''$ der Abtastplatte AP'''' in einer Ebene und sind gegen die Ebene der Teilung T'''' und der Referenzmarken $R_1''''$ $R_2''''$ des Maßstabs M'''' um eine in Meßrichtung X verlaufende Drehachse so geneigt, daß der Mittelpunkt $M_1''''$ der Abtastfelder $AT_1''''$, $AT_2''''$ in Lichtstrahlenrichtung um die Strecke l'''' gegen den Mittelpunkt $M_2''''$ der Abtastfelder $AR_1''''$, $AR_2''''$ versetzt ist, wobei c'''' der Brechungsindex des von den Lichtstrahlen durchsetzten Mediums ist.

Erfindungsgemäß wird nach Figur 5f weiter vorgeschlagen, daß jeweils die Teilung $T^5$ und die Referenzmarken $R_1^5$, $R_2^5$ des Maßstabs $M^5$ von den zugehörigen Abtastfeldern $AT_1^5$, $AT_2^5$ und $AR_1^5$, $AR_2^5$ der Abtastplatte $AP^5$ den gleichen Abstand (z. B. $n \cdot p_M/\lambda$) haben und daß zur Abtastung der Referenzmarken $R_1^5$, $R_2^5$ eine auf diesen Abstand abgestimmte Abbildungsoptik 0 vorgesehen ist.

Die Erfindung läßt sich mit besonderem Vorteil auch bei anderen Meßverfahren einsetzen, bei denen die Teilungen des Maßstabs und der Abtastfelder der Abtastplatte nicht identisch sind, beispielsweise bei einem Dreigitter-Meßverfahren, bei dem die Teilung des Abtastfeldes doppelt so groß wie die Teilung des Maßstabs ist. Bei derartigen Dreigittermeßverfahren (DE-A- 25 11 350) mit nichtparallelem Strahlengang lassen sich sehr große Abstände mit relativ großen Abstandstoleranzen erzielen.

## Patentansprüche

1. Lichtelektrische inkrementale Meßeinrichtung zur Messung der Relativlage zweier Objekte mit entlang der Teilung (T) eines Maßstabs (M) in Meßrichtung vorgesehenen Referenzmarken ($R_1$, $R_2$), die der Teilung (T) absolut zugeordnet sind und an denen im Zusammenwirken mit einer Abtasteinheit (A) reproduzierbare elektrische Referenzimpulse ($RS_1$, $RS_2$) erzeugt werden, die einen Zähler (Z) der Meßeinrichtung und/ oder eine Steuereinrichtung beaufschlagen, und mit wenigstens einer Abtastplatte (AP) in der Abtasteinheit (A) zur Abtastung der Teilung des Maßstabs (M) mittels Teilungsabtastfeldern ($AT_1$, $AT_2$) und der Referenzmarken ($R_1$, $R_2$) mittels Referenzmarkenabtastfeldern ($AR_1$, $AR_2$), wobei der Maßstab (M) und die Abtastplatte (AP) in einem bestimmten Abstand in Lichtstrahlenrichtung voneinander relativ zueinander verschiebbar sind, dadurch gekennzeichnet, daß unterschiedliche optische Weglängen der Lichtstrahlen zwischen der Teilung (T) und den Teilungsabtastfeldern ($AT_1$; $AT_2$) und zwischen den Referenzmarken ($R_1$, $R_2$) und den Referenzmarkenabtastfeldern ($AR_1$, $AR_2$) bestehen.

2. Meßeinrichtung nach Anspruch 1, dadurch gekennzeichnet, daß zur Erzielung der unterschiedlichen optischen Weglängen die Teilungsabtastfelder ($AT_1'$, $AT_2'$) und die Referenzmarkenabtastfelder ($AR_1'$, $AR_2'$) der Abtastplatte (AP') oder die Teilung (T') und die Referenzmarken ($R_1'$, $R_2'$) des Maßstabs (M') in Lichtstrahlenrichtung parallel zueinander versetzt sind.

3. Meßeinrichtung nach Anspruch 1, dadurch gekennzeichnet, daß zur Erzielung der unterschiedlichen optischen Weglängen eine transparente Schicht (U'') entweder auf den Teilungsabtastfeldern ($AT_1''$, $AT_2''$) oder auf den Referenzmarkenabtastfeldern ($AR_1''$, $AR_2''$) der Abtastplatte (AP'') aufgebracht ist, wobei die

Teilungsabtastfelder ($AT_1''$, $AT_2''$) und die Referenzmarkenabtastfelder ($AR_1''$, $AR_2''$) in einer Ebene liegen.

4. Meßeinrichtung nach Anspruch 1, dadurch gekennzeichnet, daß zur Erzielung der unterschiedlichen optischen Weglängen die Teilungsabtastfelder ($AT_1'''$, $AT_2'''$) auf der dem Maßstab ($M'''$) abgewandten Oberfläche der transparenten Abtastplatte ($AP'''$) und die Referenzmarkenabtastfelder ($AR_1'''$, $AR_2'''$) auf der dem Maßstab ($M'''$) zugewandten Oberfläche der transparenten Abtastplatte ($AP'''$) angeordnet sind.

5. Meßeinrichtung nach Anspruch 1, dadurch gekennzeichnet, daß zur Erzielung der unterschiedlichen optischen Weglängen zwischen der Teilung ($T''''$) und den Teilungsabtastfeldern ($AT_1''''$, $AT_2''''$) und zwischen den Referenzmarken ($R_1''''$, $R_2''''$) und den Referenzmarkenabtastfeldern ($AR_1''''$, $AR_2''''$) die Abtastplatte ($AP''''$) gegen den Maßstab ($M''''$) um eine Achse in Meßrichtung geneigt ist.

6. Meßeinrichtung nach Anspruch 1, dadurch gekennzeichnet, daß zur Erzielung der unterschiedlichen optischen Weglängen die Teilung ($T^5$) und die Referenzmarken ($R_1^5$, $R_2^5$) des Maßstabs ($M^5$) von den Abtastteilungsfeldern ($AT_1^5$, $AT_2^5$) und von den Referenzmarkenabtastfeldern ($AR_1^5$, $AR_2^5$) der Abtastplatte ($AP^5$) jeweils den gleichen Abstand aufweisen und daß zur Abtastung der Referenzmarken ($R_1^5$, $R_2^5$) eine auf diesen Abstand abgestimmte Abbildungsoptik (0) zur Abbildung der Referenzmarken ($R_1^5$, $R_2^5$) auf die Referenzmarkenabtastfelder ($AR_1^5$, $AR_2^5$) zwischen dem Maßstab ($M^5$ und der Abtastplatte ($AP^5$) angeordnet ist.

7. Meßeinrichtung nach Anspruch 2, dadurch gekennzeichnet, daß die Ebenen der Teilungsabtastfelder ($AT_1'$, $AT_2'$) und der Referenzmarkenabtastfelder ($AR_1'$, $AR_2'$) der Abtastplatte ($AP'$) oder die Ebenen der Teilung ($T'$) und der Referenzmarken ($R_1'$, $R_2'$) durch Ätzen erzeugt sind.

**Claims**

1. Photoelectric incremental measuring device for measuring the relative position of two objects with reference marks ($R_1$, $R_2$) which are provided along the graduation (T) of a scale (M) in the measurement direction and which are absolutely associated with the graduation (T) and at which there are generated electrical reference pulses ($RS_1$, $RS_2$), which are reproducible in conjunction with a scanning unit (A) and which act on a counter (Z) of the measuring device and/or a control device, and having at least one scanning plate (AP) in the scanning unit (A) for scanning the graduation (T) of the scale (M) by means of graduation scanning fields ($AT_1$, $AT_2$) and the reference marks ($R_1$, $R_2$) by means of reference mark scanning fields ($AR_1$, $AR_2$), the scale (M) and the scanning plate (AP) being displaceable relative to one another at a specified spacing from one another in the direction of the light beam, characterized in that differing optical path lengths of the light beams exist between the graduation (T) and the graduation scanning fields ($AT_1$; $AT_2$) and between the reference marks ($R_1$, $R_2$) and the reference mark scanning fields ($AR_1$, $AR_2$).

2. Measuring device according to claim 1, characterized in that, in order to achieve the differing optical path lengths, the graduation scanning fields ($AT_1'$, $AT_2'$) and the reference mark scanning fields ($AR_1'$, $AR_2'$) of the scanning plate ($AP'$) or the graduation ($T'$) and the reference marks ($R_1'$, $R_2'$) of the scale ($M'$) are offset in the direction of the light beam parallel to one another.

3. Measuring device according to claim 1, characterized in that, in order to achieve the differing optical path lengths, a transparent layer ($U''$) is applied either to the graduation scanning fields ($AT_1''$, $AT_2''$) or to the reference mark scanning fields ($AR_1''$, $AR_2''$) of the scanning plate ($AP''$), the graduation scanning fields ($AT_1''$, $AT_2''$) and the reference mark scanning fields ($AR_1''$, $AR_2''$) being disposed in a plane.

4. Measuring device according to claim 1, characterized in that, in order to achieve the differing optical path lengths, the graduation scanning fields ($AT_1'''$, $AT_2'''$) are disposed on the surface of the transparent scanning plate ($AP'''$) remote from the scale ($M'''$), and the reference mark scanning fields ($AR_1'''$, $AR_2'''$) are disposed on the surface of the transparent scanning plate ($AP'''$) facing the scale ($M'''$).

5. Measuring device according to claim 1, characterized in that, in order to achieve the differing optical path lengths between the graduation ($T''''$) and the graduation scanning fields ($AT_1''''$, $AT_2''''$) and between the reference marks ($R_1''''$, $R_2''''$) and the reference mark scanning fields ($AR_1''''$, $AR_2''''$), the scanning plate ($AP''''$) is inclined towards the scale ($M''''$) about an axis in the measurement direction.

6. Measuring device according to claim 1, characterized in that, in order to achieve the differing optical path lengths, the graduation (T) and the reference marks ($R_1^5$, $R_2^5$ of the scale ($M^5$) exhibit in each instance the same spacing from the graduation scanning fields ($AT_1^5$, $AT_2^5$) and from the reference mark scanning fields ($AR_1^5$, $AR_2^5$) of the scanning plate ($AP^5$), and in that, for the scanning of the reference marks ($R_1^5$, $R_2^5$), an optical imaging system (0) co-ordinated with this spacing is disposed, for the imaging of the reference marks ($R_1^5$, $R_2^5$ on the reference mark scanning fields ($AR_1^5$, $AR_2^5$), between the scale ($M^5$) and the scanning plate ($AP^5$).

7. Measuring device according to claim 2, characterized in that the planes of the graduation scanning fields ($AT_1'$, $AT_2'$) and of the reference mark scanning fields ($AR_1'$, $AR_2'$) of the scanning plate ($AP'$) or the planes of the graduation ($T'$)

and of the reference marks ($R_1'$, $R_2'$) are generated by etching.

## Revendications

1. Dispositif optoélectrique incrémental pour mesurer la position relative de deux objets, comportant: des marques de référence ($R_1$, $R_2$) qui sont prévues dans la direction de mesure, le long des graduations (T) d'une règle graduée (M) auxquelles elles sont affectées de manière absolue et qui coopèrent avec une unité de lecture (A) pour générer des impulsions électriques de référence reproductibles ($RS_1$, $RS_2$,) attaquant un compteur (Z) du dispositif de mesure et/ou un dispositif de commande; et au moins une plaque de lecture (AP) contenue dans l'unité de lecture (A), pour lire les graduations (T) de la règle graduée (M) au moyen de champs de lecture ($AT_1$, $AT_2$) des graduations et les marques de référence ($R_1$, $R_2$;) au moyen de champs de lecture ($AR_1$, $AR_2$) des marques de référence, la règle graduée (M) et la plaque de lecture (AP) étant mobiles l'une par rapport à l'autre en étant séparées par un intervalle déterminé dans la direction des rayons lumineux, caractérisé en ce que les trajets optiques des rayons lumineux entre les graduations (T) et les champs de lecture des graduations ($AT_1$; $AT_2$) sont de longueurs différentes des trajets optiques entre les marques de reference ($R_1$, $R_2$) et les champs de lecture des marques de référence ($AR_1$, $AR_2$).

2. Dispositif de mesure selon revendication 1, caractèrisé en ce que pour obtenir les longueurs différent es des trajets optiques, le champs de lecture des graduations ($AT_1'$, $AT_2'$) et les champs de lecture des marques de référence ($AR_1'$, $AR_2'$) situés sur la plaque de lecture (AP'), ou les graduations (T') et les marques de référence ($R_1'$, $R_2'$) situées sur la règle graduée (M') sont mutuellement décalés parallèlement, suivant la direction des rayons lumineux.

3. Dispositif de mesure selon revendication 1, caractérisé en ce que, pour obtenir les longueurs différentes des trajets optiques, une couche transparente (U'') est appliquée soit sur les champs de lecture des graduations ($AT_1''$, $AT_2''$), soit sur les champs de lecture des marques de référence ($AR_1''$, $AR_2''$) aménagés sur la plaque de lecture (AP''), les champs de lecture des graduations ($AT_1''$, $AT_2''$) et les champs de lecture des marques de référence ($AR_1''$, $AR_2''$) étant situés dans un plan.

4. Dispositif de mesure selon revendication 1, caractérisé en ce que, pour obtenir les longueurs différentes des trajets optiques, les champs de lecture des graduations ($AT_1'''$, $AT_2'''$) sont situés sur celle des faces de la plaque de lecture (AP''') transparente qui n'est pas tournée vers la règle graduée (M'''), et les champs de lecture des marques de référence ($AR_1'''$, $AR_2'''$) sont situés sur celle des faces de la plaque de lecture (AP''') transparente qui est tournée vers la règle graduée (M''').

5. Dispositif de mesure selon revendication 1, caractérisé en ce que, pour obtenir les longueurs différentes des trajets optiquées, d'une part entre les graduations (T'''') et les champs de lecture des graduations ($AT_1''''$, $AT_2''''$) et, d'autre part, entre les marques de référence ($R_1''''$, $R_2''''$) et les champs de lecture des marques de référence ($AR_1''''$, $AR_2''''$), la plaque de lecture (AP'''') est inclinée par rapport à la règle graduée (M''''), autour d'un axe orienté dans la direction de mesure.

6. Dispositif de mesure selon revendication 1, caractérisé en ce que, pour obtenir les longueurs différentes des trajets optiques, les graduations ($T^5$) et les marques de référence ($R_1{}^5$; $R_2{}^5$) de la règle graduée ($M^5$) présentent le même éloignement par rapport aux champs de lecture des graduations ($AT_1{}^5$; $AT_2{}^5$) et aux champs de lecture des marques de référence ($AR_1{}^5$; $AR_2{}^5$) de la plaque de lecture ($AP^5$), et en ce que, pour lire les marques de référence ($R_1{}^5$, $R_2{}^5$), une optique stigmatique (0) appropriée à cet éloignement est agencée entre la règle graduée ($M^5$) et la plaque de lecture ($AP^5$), pour restituer une image des marques de référence ($R_1{}^5$, $R_2{}^5$) sur les champs de lecture des marques de référence ($AR_1{}^5$, $AR_2{}^5$).

7. Dispositif de mesure selon revendication 2, caractérisé en ce que les plans des champs de lecture des graduations ($AT_1'$, $AT_2'$) et des champs de lecture des marques de référence ($AR_1'$ $AR_2'$) de la plaque de lecture (AP'), ou les plans des graduations (T') et des marques de référence ($R_1'$, $R_2'$), sont obtenus par attaque chimique.

**Fig.1**

**Fig.2**

**Fig.3**

## Fig.4

$$I$$

$$p_M^2/\lambda \qquad 2p_M^2/\lambda \qquad 3p_M^2/\lambda \qquad a$$

## Fig.5a

$$l'$$

AT$_1'$

T'

AT$_2'$

R$_1'$, R$_2'$

AR$_1'$, AR$_2'$

M'     AP'

## Fig.5b

$$l'$$

AT$_1'$

T'

AT$_2'$

R$_1'$, R$_2'$

AR$_1'$, AR$_2'$

M'     AP'

# Fig.5c

$l''$

$T''$

$AT_1''$

$AT_2''$

$U''$

$R_1'', R_2''$

$AR_1'', AR_2''$

$M''$

$AP''$

# Fig.5d

$l'''$

$T'''$

$AT_1'''$

$AT_2'''$

$R_1''', R_2'''$

$AR_1''', AR_2'''$

$M'''$

$AP'''$

# Fig.5e

$T''''$

$AT_1''''$

$M_1''''$

$AT_2''''$

$R_1'''', R_2''''$

$AR_1'''', AR_2''''$

$M_2''''$

$M''''$

$AP''''$

$l''''$

# Fig.5f

$T^5$

$AT_1^5$

$AT_2^5$

$R_1^5, R_2^5$

$AR_1^5, AR_2^5$

$M^5$

$0$

$AP^5$